# FASCICULE DE BREVET EUROPEEN

(11) **EP 0 656 495 B1**
(45) Date de publication et mention de la délivrance du brevet: **28.01.1998**
(21) Numéro de dépôt: 94420333.0
(22) Date de dépôt: 30.11.1994
(51) Int. Cl.: F16K 11/24, F16K 39/02

(54) **Distributeur de liquide fonctionnant avec des électrovannes**
Flüssigkeitsverteiler mit Elektromagnetventilen
Liquid distributor with solenoid valves

(30) Priorité: 01.12.1993 FR 9314623
(43) Date de publication de la demande: 07.06.1995
(73) Titulaire: EATON S.A.M., MC-98000 Monaco (MC)
(72) Inventeur: Arnaud, Gérard, F-06240 Beausoleil (FR)
(74) Mandataire: Bratel, Gérard

(56) Documents cités:
- AT-B- 391 179
- DE-A- 3 919 245
- GB-A- J27 720
- US-A- 4 270 570
- US-A- 4 570 676

## Description

La présente invention concerne un distributeur de liquide fonctionnant avec des électrovannes, constituant notamment un distributeur d'eau pour appareil électro-ménager tel que lave-linge ou lave-vaisselle, permettant de diriger sélectivement un débit de liquide vers plusieurs voies de sortie. Ce distributeur de liquide, notamment d'eau, est du genre comportant au moins une entrée de liquide, de préférence au moins deux entrées de liquide, auxquelles sont associées respectivement des vannes commandées, et au moins deux sorties de liquide. Dans la mesure où il comporte deux ou plusieurs entrées, ce distributeur de liquide peut aussi constituer un mélangeur.

D'une façon générale, des distributeurs de liquide de ce genre sont utilisés dans des appareils électroménagers tels que lave-linge et lave-vaisselle, pour diriger l'eau, au moment où elle est nécessaire, vers l'une ou l'autre de deux ou plusieurs voies. Les distributeurs d'eau, actuellement utilisés dans ce domaine d'application, peuvent fournir un débit d'eau de 0,3 à 20 litres/minute, avec une pression comprise entre 0,2 et 10 bars.

Un distributeur d'eau de ce genre est décrit par exemple dans le document US-A-4270570, qui concerne plus particulièrement un mélangeur comportant une entrée d'eau chaude, une entrée d'eau froide, et une double sortie d'eau délivrant, sélectivement, un faible débit d'eau ou un débit d'eau élevé, trois électrovannes étant prévues respectivement sur les deux entrées et sur la sortie.

Les distributeurs d'eau connus, tels que celui du document US-A-4270570, utilisent des électrovannes pilotées, ce qui les rend complexes, encombrants et coûteux, notamment en raison de la nécessité d'adjoindre à chaque électrovanne un équipement de pilotage.

Le document DE-A-3919245 décrit un distributeur d'eau pour installation de lavage de véhicules, avec un certain nombre de raccords d'entrée et de sortie d'eau. Ce distributeur comporte un certain nombre de composants pour la commande et le dosage, certains de ces composants étant des électrovannes. Toutefois, les électrovannes sont ici disséminées sur toute l'étendue du distributeur en forme de plaque, notamment aux embranchements de canaux internes, et ne sont pas disposées au niveau des entrées et des sorties de liquide. Enfin, le document DE-A-3619245 ne précise pas quel est le type d'électrovannes utilisées.

La présente invention vise à éviter les inconvénients des distributeurs de liquide actuels, notamment liés aux électrovannes pilotées, en fournissant un distributeur de liquide de conception différente, qui soit plus simple, plus compact et moins coûteux, tout en possédant un fonctionnement très satisfaisant.

A cet effet, l'invention a pour objet un distributeur de liquide du genre précisé en introduction, et ayant les caractéristiques de la partie caractérisante de la revendication 1.

Le principe de fonctionnement de ce distributeur de liquide consiste à couper l'arrivée de liquide en amont, au moyen d'au moins une vanne commandée (normale ou de sécurité), puis à mettre les différentes électrovannes du distributeur en position ouverte ou fermée, selon les sorties de liquide devant être momentanément utilisées, avant de rouvrir ladite vanne commandée afin de laisser le liquide s'écouler par la ou les sorties désirées, en parcourant le corps du distributeur.

Grâce au clapet de sécurité, la pression résiduelle à l'intérieur du corps du distributeur (au moment de l'actionnement des électrovannes à action directe) est faible, et permet le bon fonctionnement de des électrovannes. En outre, ce clapet de sécurité permet de réaliser le distributeur de liquide avec des matériaux ayant une résistance à la rupture juste suffisante pour résister à la pression résiduelle, donc de fabriquer ce distributeur de façon économique. Un avantage supplémentaire du clapet de sécurité est de permettre la suppression d'une électrovanne, en utilisant le passage du liquide par ce clapet pour alimenter l'une des sorties de liquide, d'où une simplification et une économie supplémentaires.

Au moins une partie des sorties de liquide peuvent être équipées de régulateurs de débit.

Selon une autre caractéristique, le distributeur de liquide comprend au moins une électrovanne à action directe, notamment une électrovanne normalement ouverte associée à une sortie de liquide, dont le joint obturateur est percé d'un petit trou central, apte à être obturé ou dégagé par une tête du noyau mobile de l'électrovanne, de manière à permettre le retour de cette électrovanne en position de repos, notamment sous l'effet de son ressort de rappel, même en cas de pression résiduelle élevée à l'intérieur du corps du distributeur. Cette disposition permet d'ouvrir l'électrovanne en deux temps, et de façon certaine, en créant une fuite initiale par le petit trou du joint obturateur, même si ce joint se trouve appliqué sur l'orifice de sortie correspondant par une force ne permettant pas son décollement direct par la force du ressort de rappel de l'électrovanne. Ainsi le distributeur de liquide peut toujours être remis en état de fonctionnement.

Lorsque le distributeur de liquide objet de la présente invention constitue un distributeur d'eau, pour appareil électro-manager tel que lave-linge ou lave-vaisselle, les différentes électrovannes sont commandées, au moment désiré, à partir du programmateur de l'appareil.

De toute façon, l'invention sera mieux comprise à l'aide de la description qui suit, en référence au dessin schématique annexé représentant, à titre d'exemple, une forme d'exécution de ce distributeur de liquide :
Figure 1 est une vue d'ensemble, en coupe, d'un distributeur d'eau conforme à la présente invention, dans une première position d'utilisation ;
Figure 2 est une vue similaire à figure 1, montrant le même distributeur d'eau dans une seconde position d'utilisation ;
Figure 3 est une vue partielle en coupe, à échelle agrandie, d'un détail d'électrovanne de ce distributeur d'eau ;
Figure 4 est une vue similaire à figure 3, mais illustrant une autre position de fonctionnement.

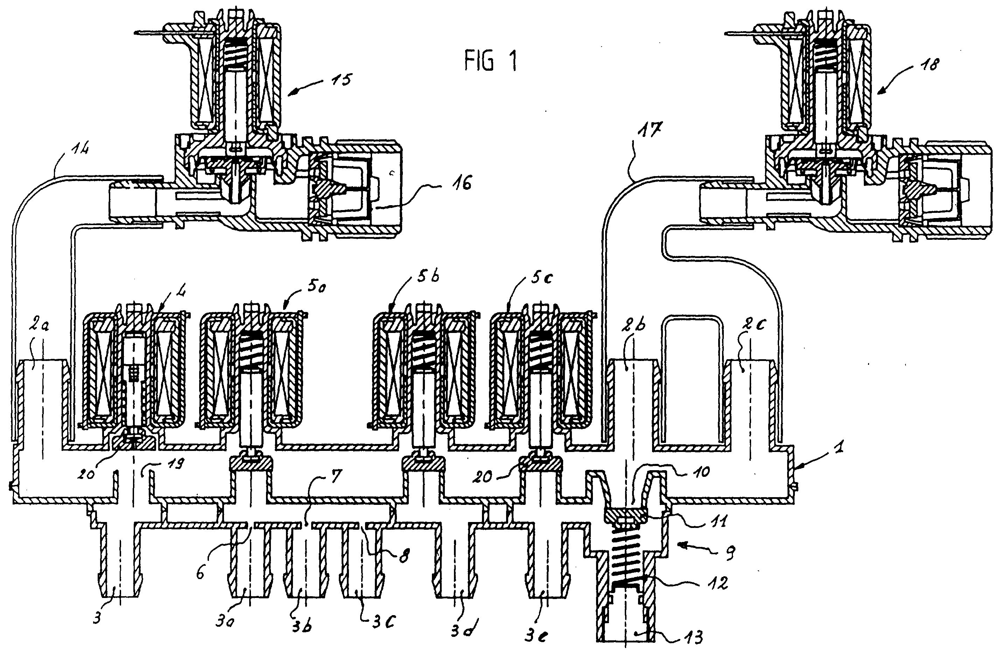

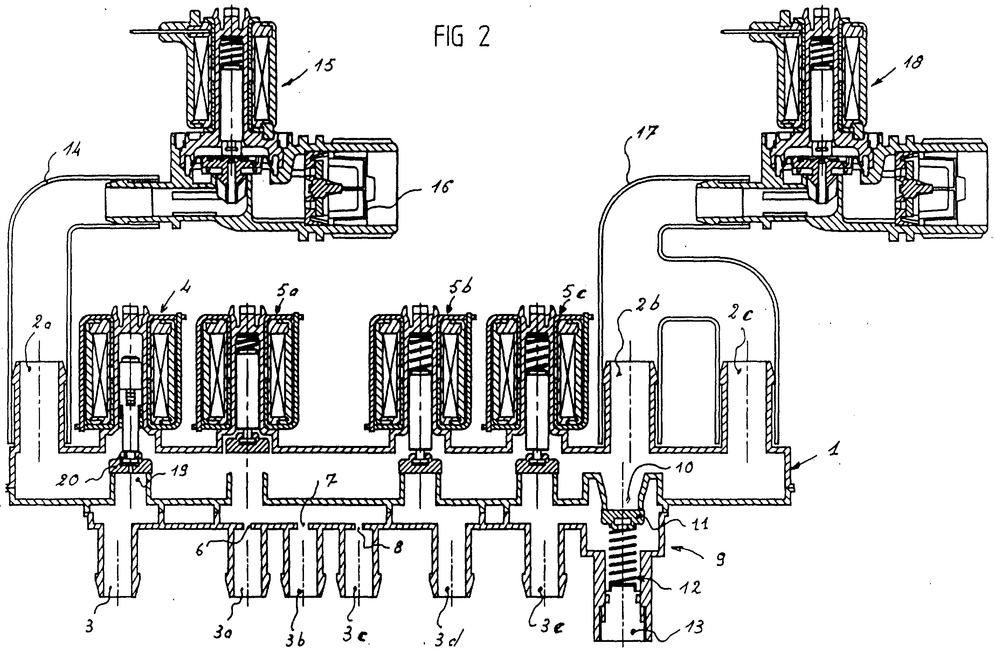

Le distributeur d'eau, représenté dans son ensemble aux figures 1 et 2, comprend un corps creux 1 pourvu sur un côté de plusieurs entrées d'eau, soit dans l'exemple considéré trois entrées d'eau 2a, 2b et 2c. Ce distributeur d'eau comporte, sur son côté opposé, des sorties d'eau multiples 3,3a,3b,3c,3d et 3e, constituées par un ensemble d'embouts tubulaires rapporté sur le corps 1.

Aux sorties d'eau sont associées des électrovannes à action directe, soit normalement ouvertes, telle que l'électrovanne 4 associée à la première sortie 3, soit normalement fermées telles que les électrovannes 5a,5b et 5c associées aux autres sorties d'eau, par exemple avec la disposition suivante :
- Une première électrovanne normalement fermée 5a est associée aux trois sorties d'eau 3a,3b et 3c.
- Une deuxième électrovanne normalement fermée 5b est associée à la sortie d'eau 3d.
- Une troisième électrovanne normalement fermée 5c est associée à la dernière sortie d'eau 3e.

Les électrovannes 4,5a,5b et 5c sont directement fixées sur le corps 1 du distributeur d'eau.

Certaines sorties d'eau 3a,3b et 3c sont ici équipées de régulateurs de débit respectifs 6, 7 et 8, réalisés sous la forme d'orifices calibrés.

Sur le corps 1 du distributeur d'eau est monté un clapet de sécurité 9, adapté sur une ouverture 10 du corps 1. Le clapet de sécurité 9 comprend un joint 11, normalement appliqué contre le bord de l'ouverture 10 par un ressort 12 qui prend lui-même appui sur un organe de réglage 13 vissable.

Sur la première entrée d'eau 2a est raccordé un conduit d'arrivée 14, sur lequel est placée une vanne de sécurité 15 à commande électrique, mécanique, magnétique ou pneumatique, ici représentée comme étant une électrovanne, à laquelle est associé un filtre et/ou un régulateur de débit 16.

Les deux autres entrées d'eau 2b et 2c, que l'on suppose ici aussi utilisées, sont raccordées à un conduit d'arrivée commun 17 sur lequel est placée une autre vanne de sécurité 18, identique à la précédente.

Pour fonctionner, c'est-à-dire pour permettre la sélection des sorties d'eau 3,3a,....3e utilisées à un moment donné, la pression d'eau à l'intérieur du corps 1 du distributeur d'eau doit être nulle ou inférieure à 0,1 bar (valeur indicative). A cet effet, l'arrivée d'eau sous pression à l'intérieur du corps 1 est coupée en amont par action sur la vanne de sécurité 15 (ou sur les vannes de sécurité 15 et 18 dans le cas d'entrées d'eau multiples).

Ensuite, les électrovannes 4,5a,5b et 5c sont mises chacune dans la position désirée, pour obturer ou libérer les sorties d'eau correspondantes 3 à 3e. Enfin, on ouvre la vanne de sécurité 15 (ou les deux vannes de sécurité 15 et 18), afin de laisser s'écouler librement l'eau par la ou les sorties désirées.

Des exemples particuliers de fonctionnement sont illustrés par les figures 1 et 2 :

Dans la position de la figure 1, toutes les électrovannes 4,5a,5b et 5c sont en position de repos (position occupée lorsqu'elles ne sont pas alimentées en courant électrique). Seule l'électrovanne 4 étant normalement ouverte, on obtient, lors de l'ouverture de la vanne de sécurité 15, un écoulement de l'eau par la seule sortie 3 du distributeur.

Dans la position de la figure 2, les électrovannes 4 et 5a sont les seules alimentées en courant électrique, donc amenées en position de travail, les deux autres électrovannes 5b et 5c restant en position de repos. Lorsque l'on ouvre la vanne de sécurité 15, le liquide s'écoule par les sorties 3a,3b et 3c du distributeur, le débit d'eau pouvant être ici ajusté pour chaque sortie à l'aide des régulateurs 6,7 et 8.

Si la pression d'eau est trop élevée à l'intérieur du corps 1 du distributeur, une force hydraulique s'exerce sur le joint 11 du clapet de sécurité 9, à l'encontre de l'action du ressort 12, provoquant ainsi la compression de ce ressort 12 et le recul du joint 11, qui se sépare alors du bord de l'ouverture 10. Une fuite de liquide se produit ainsi par l'ouverture 10 et la sortie 3e, donc une chute de pression intervient à l'intérieur du corps 1 du distributeur. Lorsque la pression est retombée à une valeur préalablement choisie (pression définie par le réglage du clapet 9 au moyen de l'organe 13), le clapet 9 se referme et il règne désormais à l'intérieur du corps 1 du distributeur une pression réduite dite pression résiduelle, n'excédant pas ladite valeur prédéfinie.

Si pour une raison quelconque l'une des électrovannes normalement fermées 5a, 5b et 5c ne fonctionne plus, alors que simultanément l'électrovanne normalement ouverte 4 fonctionne et ferme ainsi la sortie 3 correspondante, la pression va monter à l'intérieur du corps 1 du distributeur jusqu'à l'ouverture du clapet de sécurité 9. Si ensuite la pression résiduelle est supérieure à une certaine valeur, pouvant être de l'ordre de 0,2 bars, le distributeur d'eau ne peut plus fonctionner. En effet lorsque la pression résiduelle est trop élevée, et à cause de la force exercée par cette pression sur les joints obturateurs des électrovannes 4, 5a,5b et 5c, ces électrovannes n'ont plus assez de puissance pour permettre le fonctionnement, ceci concernant notamment l'électrovanne normalement ouverte 4. Dans le cas de cette électrovanne 4, pour libérer l'orifice 19 obturé par son joint 20 lorsqu'on cesse d'alimenter l'électrovanne en courant électrique, il est nécessaire d'exercer sur le joint 20 une traction au moins égale à la force de pression, qui est le produit de la pression résiduelle par la section de l'orifice 19 ; le ressort de rappel 21 de l'électrovanne 4 peut être insuffisant pour exercer une telle force de traction.

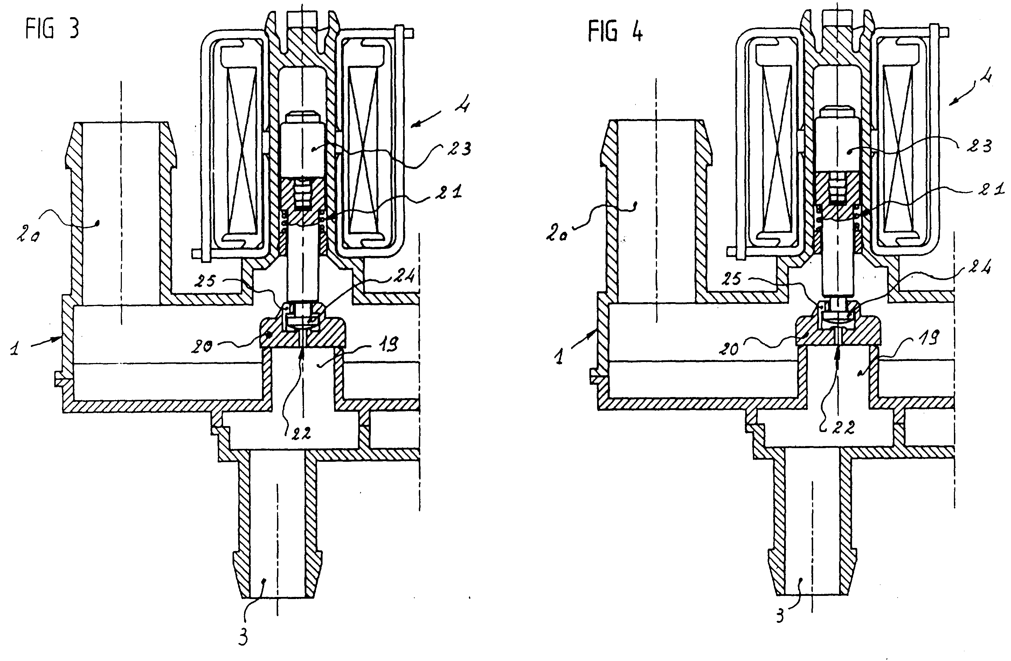

Pour pallier à ce défaut, il est proposé, comme l'illustrent les figures 3 et 4, de ménager dans l'axe du joint 20 un petit trou 22, traversant le joint 20 de part en part, le diamètre du trou 22 étant de l'ordre de 1mm par exemple. En outre, le noyau mobile 23 de l'électrovanne 4 possède une tête 24 apte à obturer l'entrée du trou 22 (voir figure 3) ou à s'en écarter légèrement, la tête 24 étant retenue dans un logement formé sur le joint 20, dans la région du trou précité 22. Dans la paroi de ce logement est ménagé au moins un canal 25, mettant ce logement en communication avec l'intérieur du corps 1 du distributeur.

Ainsi, lorsqu'on coupe l'alimentation en courant électrique de l'électrovanne normalement ouverte 4, le noyau mobile 23 de celle-ci tend à revenir vers sa position de repos sous l'effet du ressort de rappel 21, qui initialement n'a plus qu'à vaincre la force résultant de la pression résiduelle s'exerçant sur la section du petit trou 22, qui est de beaucoup inférieure à la section de l'orifice 19. A ce moment, la tête 24 du noyau mobile 23 s'est légèrement décollée (voir figure 4), et laisse passer une petite fuite d'eau par le canal 25 et le trou 22 vers la sortie 3. Une chute de la pression résiduelle se produit alors, si bien que l'effort à vaincre pour déplacer le joint 20 devient moins important et peut être exercé sans difficulté par le ressort de rappel 21. L'ensemble de l'électrovanne 4 peut alors se remettre en position de repos, qui est la position ouverte.

Un tel joint avec trou peut aussi être prévu sur les électrovannes normalement fermées 5a,5b et 5c, mais l'avantage obtenu est dans ce cas de moindre importance car, pour remettre le distributeur d'eau en état de fonctionnement normal, il est nécessaire d'alimenter ces électrovannes en courant électrique.

On notera que, dans le cas d'un distributeur de liquide à deux ou plusieurs entrées, telles que les entrées 2a,2b et 2c de l'exemple représenté, ce distributeur peut servir en outre de mélangeur, par exemple avec une entrée recevant de l'eau chaude et une autre entrée recevant de l'eau froide.

Il va de soi que l'invention ne se limite pas à la seule forme d'exécution de ce distributeur de liquide qui a été décrite ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention :
- en modifiant le nombre des entrées et des sorties de liquide,
- en prévoyant toutes combinaisons d'électrovannes normalement ouvertes et/ou d'électrovannes normalement fermées,
- en associant aux entrées de liquide des vannes normales ou de sécurité commandées par tout moyen,
- en ajoutant sur ce distributeur tous organes de régulation ou de sécurité,
- en destinant un tel distributeur à des liquides autres que l'eau, dans des appareils ou installations de toute nature.

## Revendications

1. Distributeur de liquide fonctionnant avec des électrovannes, constituant notamment un distributeur d'eau pour appareil électro-ménager tel que lave-linge ou lave-vaisselle, comportant au moins une entrée de liquide, de préférence au moins deux entrées de liquide (2a,2b,2c), auxquelles sont associées respectivement des vannes commandées (15,18), et au moins deux sorties de liquide (3,3a,3b,3c,3d,3e), caractérisé en ce que : respectivement des électrovannes normalement ouvertes (4) et/ou des électrovannes normalement fermées (5a,5b,5c) sont associées aux sorties de liquide, les sorties de liquide étant ainsi aptes à être mises en communication sélectivement avec la ou les entrées de liquide, la vanne commandée (15,18), telle qu'une électrovanne, associée à la ou chaque entrée de liquide (2a,2b,2c) étant prévue pour couper l'arrivée de liquide (14,17) en amont de cette entrée (2a,2b,2c) avant actionnement sélectif des électrovannes (5,5a,5b,5c) associées aux sorties de liquide (3,3a,3b,3c,3d,3e); les électrovannes (4,5a,5b,5c), associées aux sorties de liquide (3,3a,3b,3c,3d,3e), sont toutes des électrovannes à action directe; et un clapet de sécurité (9), de préférence réglable, est monté sur le corps (1) du distributeur pour limiter la pression de liquide à l'intérieur de ce dernier.

2. Distributeur de liquide selon la revendication 1, caractérisé en ce qu'au moins une partie des sorties de liquide (3a,3b,3c) sont équipées de régulateurs de débit (6,7,8).

3. Distributeur de liquide selon la revendication 1 ou 2, caractérisé en ce qu'il comprend au moins une électrovanne à action directe, notamment une électrovanne normalement ouverte (4), associée à une sortie de liquide (3), dont le joint obturateur (20) est percé d'un petit trou central (22), apte à être obturé ou dégagé par une tête (24) du noyau mobile (23) de l'électrovanne, de manière à permettre le retour de cette électrovanne (4) en position de repos, notamment sous l'effet de son ressort de rappel (21), même en cas de pression résiduelle élevée à l'intérieur du corps (1) du distributeur.

4. Distributeur de liquide selon la revendication 3, caractérisé en ce que la tête (24) du noyau mobile (23) de l'électrovanne à action directe (4) est retenue dans un logement formé sur le joint obturateur (20), dans la région du trou précité (22), au moins un canal (25) étant ménagé dans la paroi dudit logement pour mettre ce logement en communication avec l'intérieur du corps (1) du distributeur.

## Patentansprüche

1. Mit Elektromagnetventilen arbeitender Flüssigkeitsverteiler, der insbesondere einen Wässerverteiler für Elektrohaushaltsgeräte, wie eine Wasch- oder Geschirrspülmaschine, bildet und der wenigstens einen Flüssigkeitseinlaß, vorzugsweise zwei jeweils mit Steuerventilen (15, 18) verbundene Flüssigkeitseinlässe (2a, 2b, 2c), und wenigstens zwei Flüssigkeitsauslässe (3, 3a, 3b, 3c, 3d, 3e) aufweist, **dadurch gekennzeichnet, daß** jeweils normalerweise offene Elektromagnetventile (4) und/oder normalerweise geschlossene Elektromagnetventile (5a, 5b, 5c) mit den Flüssigkeitsauslässen verbunden sind, wobei die Flüssigkeitsauslässe folglich geeignet sind, selektiv mit dem Flüssigkeitseinlaß oder den Flüssigkeitseinlässen verbunden zu werden, und wobei das mit dem Flüssigkeitseinlaß oder den Flüssigkeitseinlässen (2a, 2b, 2c) verbundene Steuerventil (15, 18), wie ein Elektromagnetventil, vorgesehen ist, um die Flüssigkeitszufuhr (14, 17) oberhalb dieses Einlasses vor der selektiven Betätigung der mit den Flüssigkeitsauslässen (3, 3a, 3b, 3c, 3d, 3e) verbundenen Elektromagnetventile (4, 5a, 5b, 5c) abzutrennen; daß die mit den Flüssigkeitsauslässen (3, 3a, 3b, 3c, 3d, 3e) verbundenen Elektromagnetventile (4, 5a, 5b, 5c) alle direkt wirkende Elektromagnetventile sind; und daß ein, vorzugsweise einstellbares, Sicherheitsventil (9) an dem Körper (1) des Verteilers angebracht ist, um den Flüssigkeitsdruck in dessen Inneren zu begrenzen.

2. Flüssigkeitsverteiler nach Anspruch 1, **dadurch gekennzeichnet, daß** wenigstens ein Teil der Flüssigkeitsauslässe (3a, 3b, 3c) mit Durchflußreglern (6, 7, 8) versehen ist.

3. Flüssigkeitsregler nach Anspruch 1 oder 2, **dadurch gekennzeichnet, daß** er wenigstens ein direkt wirkendes Elektromagnetventil, insbesondere ein normalerweise offenes Elektromagnetventil (4), umfaßt, das mit einem Flüssigkeitsauslaß (3) verbunden ist, dessen Verschlußdichtung (20) mit einem kleinen, mittigen Loch (22) durchbohrt ist, welches geeignet ist, von einem Kopf (24) des beweglichen Kerns (23) des Elektromagnetventils verschlossen oder freigegeben zu sein, um die Rückkehr dieses Elektromagnetventils (4) in eine Ausgangsstellung, insbesondere unter dem Einfluß seiner Rückstellfeder (21), zu erlauben, auch wenn der Restdruck im Inneren des Körpers (1) des Verteilers erhöht ist.

4. Flüssigkeitsregler nach Anspruch 3, **dadurch gekennzeichnet, daß** der Kopf (24) des beweglichen Kerns (23) des direkt wirkenden Elektromagnetventils (4) in einer in der Verschlußdichtung (20) ausgeformten Lagerung im Bereich des vorgenannten Lochs (22) festgehalten ist, wobei in der Wand der genannten Lagerung wenigstens ein Durchlaß (25) vorgesehen ist, um diese Lagerung mit dem Inneren des Körpers (1) des Verteilers zu verbinden.

## Claims

1. Liquid distributor operating with solenoid valves, constituting notably a water distributor for a domestic electrical appliance such as a washing machine or dishwasher, having at least one liquid inlet, and preferably at least two liquid inlets (2a, 2b, 2c), with which controlled valves (15, 18) are respectively associated, and at least two liquid outlets (3, 3a, 3b, 3c, 3d, 3e), characterised in that: respectively normally open solenoid valves (4) and/or normally closed solenoid valves (5a, 5b, 5c) are associated with the liquid outlets, the liquid outlets thus being able to be put in communication selectively with the liquid inlet or inlets, the controlled valve (15, 18), such as a solenoid valve, associated with the or each liquid inlet (2a, 2b, 2c) being provided for cutting off the liquid feed (14, 17) upstream of this inlet (2a, 2b, 2c) before selective actuation of the solenoid valves (5, 5a, 5b, 5c) associated with the liquid outlets (3, 3a, 3b, 3c, 3d, 3e); the solenoid valves (4, 5a, 5b, 5c) associated with the liquid outlets (3, 3a, 3b, 3c, 3d, 3e) are all direct-action solenoid valves; and a safety valve (9), preferably adjustable, is mounted on the body (1) of the distributor in order to limit the liquid pressure inside the latter.

2. Liquid distributor according to Claim 1, characterised in that at least some of the liquid outlets (3a, 3b, 3c) are equipped with flow regulators (6, 7, 8).

3. Liquid distributor according to Claim 1 or 2, characterised in that it comprises at least one direct-action solenoid valve, notably a normally open solenoid valve (4), associated with a liquid outlet (3), whose closure seal (20) has in it a small central hole (22), able to be closed off or left free by a head (24) of the movable core (23) ofthe solenoid valve, so as to enable this solenoid valve (4) to return to the idle position, notably under the effect of its return spring (21), even in the case of high residual pressure inside the body (1) of the distributor.

4. Liquid distributor according to Claim 3, characterised in that the head (24) of the movable core (23) ofthe direct-action solenoid valve (4) is held in a recess formed on the closure seal (20), in the region of the aforementioned hole (22), at least one channel (25) being formed in the wall of the said recess in order to put this recess in communication with the inside of the body (1) of the distributor.
